# EUROPEAN PATENT SPECIFICATION

(11) **EP 3 328 578 B1**
(45) Date of publication and mention of the grant of the patent: **04.09.2019**
(21) Application number: 16766667.6
(22) Date of filing: 27.07.2016
(51) Int. Cl.: B23K 11/30

(54) **ROBOT GUN TIP CHANGING STATION**
WECHSELSTATION FÜR ROBOTISCHE SCHWEISSBRENNERSPITZE
STATION DE CHANGE POUR L'EXTREMITÉ D'UN PISTOLET DE SOUDAGE ROBOTISÉ

(30) Priority: 27.07.2015 TR 201509267
(43) Date of publication of application: 06.06.2018
(73) Proprietor: Ford Otomotiv Sanayi A. S., 34885 Sancaktepe/Istanbul (TR)
(72) Inventor: OZ, Ismail, Basiskele/Kocaeli (TR); SANDIKCI, Onur, Basiskele/Kocaeli (TR); HAN, Tarik, Basiskele/Kocaeli (TR); OZGUN, Ahmet, Basiskele/Kocaeli (TR)
(74) Representative: Dericioglu Kurt, Ekin
(86) International application number: PCT/TR2016/050239
(87) International publication number: WO 2017/018958

(56) References cited:
- EP-A1- 2 813 312
- US-A- 4 904 838

## Description

### Field of the Invention

The present invention relates to a multi-purpose station which is used to automatically perform trimming and changing copper electrodes of robotic spot welding guns, at the same time which can also be used as robot tool check point.

### Background of the Invention

Spot welding method is especially used in welding sheet metals, in places where continuous welding process is not required. In this spot welding method, high energy is intensified on a very small area of the sheet metals with electric current. Therefore, a joint that cannot detach is created between the sheet metals with the high compression pressure. The whole method takes a very small part of one second, it can be easily applied without requiring additional material such as gas or wire, and automation processes can be performed economically and without problem.

The welding electrodes are abraded in time due to use. The end of the electrode deteriorates as a result of abrasion and causes the current and the pressure to decrease and this negatively affects the welding quality. This situation requires periodic maintenance of the electrode ends. The maintenance process is performed by providing the previous form to the deteriorated end by means of tools such as file, sandpaper; and eliminating the elements preventing the current passage.

First the electrode should be removed in order to perform maintenance process. In the embodiments known in the state of the art, a gear system with electric motor drive compresses and rotates the electrode, and then it removes it from the gun adapter. The robot aligns the adapter with the electrode in the charger, and enables the electrode to be compressed into the adapter by pushing on the electrode. However, in these applications when the robot applies pressure on the charger in order to take the new electrode, this pressure is transferred to whole system and the concrete ground connection. As a result, breaks in whole unit and ruptures on the ground occur in time. In these applications, electrode removal system is driven with the electric motor and there is a spare part cost.

In the United States patent document No. US4904838 and Europe patent document No. EP2813312, known in the state of the art, disclose electrode changers for bonding elements of a workpiece according to the preamble of claim 1.

Furthermore, in the applications known in the state of the art, in case there is leakage at the robot end point, the robot should be moved to a reference point located mounted to a separate location for control and correction process. Therefore, since the robot reference point is mounted in a different area, it takes extra space in the automatic area.

### The Objective of the Invention

The objective of the present invention is to provide a robot gun tip changing station which prevents the force created due to pressure from coming on the equipment and the ground connection by means of the spring system absorbing the said pressure applied by the robot on the system during changing end.

Another objective of the present invention is to provide a robot gun tip changing station which is compact and takes smaller place by combining tip changing, tip dressing and tool check point features of the equipment in a single system.

### Detailed Description of the Invention

A welding electrodes changing station developed to fulfill the objective of the present invention is illustrated in the accompanying figures, in which:
Figure 1 is the perspective view of the welding electrodes changing station.
Figure 2 is the perspective view of the electrode removal system, profile and mounting arms.
Figure 3 is the perspective view of the electrode removal system and the plate.
Figure 4 is the exploded view of the electrode removal system and the plate.
Figure 5 is the perspective view of the electrode removal system.
Figure 6 is the exploded view of the electrode removal system.
Figure 7 is the perspective view of the electrode changing system.
Figure 8 is the exploded view of the electrode changing system.
Figure 9 is the perspective view of the charger.
Figure 10 is the exploded view of the charger.
Figure 11 is the perspective view of the spring connection system.
Figure 12 is the exploded view of the spring connection system.

The components shown in the figures are each given reference numbers as follows:
**1.** Welding electrodes changing station
**2.** Base plate
**3.** Profile
**4.** Electrode removal system
   4.1 First gear
   4.2 First pusher
   4.3 Second pusher
   4.4 Second gear
   4.5 First valve
   4.6 Box
   4.7 Pipe
   4.8 Second valve
**5.** Electrode changing system
   5.1 Charger
   5.2 Spring connection system
      5.2.1 Support piece
      5.2.2 Shaft
      5.2.3 Connection piece
      5.2.4 Spring
   5.3 Sensor
**6.** Control unit
**7.** Mounting leg
**8.** Sharpener
**9.** Tool check point

A welding electrodes changing station (1), which enables to change, trim and control the welding electrodes present at a robot end, essentially comprises
- at least one base plate (2) which is mounted on the ground,
- at least one profile (3) which is mounted on the base plate (2),
- at least one electrode removal system (4) which is connected to a plate mounted on the profile (3) and enables the electrode at a robot end to be removed,
   ▪ at least one first gear (4.1) which enables an electrode to be removed from the robot end to be compressed,
   ▪ at least one first pusher (4.2) which enables to apply pressure on the first gear (4.1) on which the electrode to be removed is placed,
   ▪ at least one second pusher (4.3) which moves in opposite direction of the first pusher (4.2),
   ▪ at least one second gear (4.4) which is located on an arm connected to the second pusher (4.3), and which enables the electrode compressed in the first gear (4.1) as a result of the movement of the second pusher (4.3) to be removed,
   ▪ at least one first valve (4.5) which enables to control the air to be sent to the first pusher (4.2) and the second pusher (4.3),
   ▪ at least one box (4.6) wherein the electrodes removed from the said robot end are collected,
   ▪ at least one pipe (4.7) which blows air to the electrode so that the removed electrode falls into the box (4.6),
   ▪ at least one second valve (4.8) which enables to control the air which is to be sent to the pipe (4.7),
- at least one electrode changing system (5) which enables to attach electrode to the robot end,
   ▪ at least one charger (5.1) which enables a plurality of electrodes to be carried,
   ▪ at least one spring connection system (5.2) which enables to absorb the pressure applied towards the charger (5.1) while the electrode is being taken by the robot,
      - at least two support pieces (5.2.1) which are fixed to a plate connecting the electrode changing system (5) to the profile (3),
      - at least one shaft (5.2.2) which is placed between the support pieces (5.2.1),
      - at least one connection piece (5.2.3) which enables the charger (5.1) and the shaft (5.2.2) to be connected to each other,
      - at least one spring (5.2.4) which is placed between the connection piece (5.2.3) and at least one support piece (5.2.1),
   ▪ at least one sensor (5.3) which enables to detect whether there is an electrode at the robot end,
- at least one control unit (6) which is adapted to communicate with the robot and the sensor (5.3) and trigger the first valve (4.5) and the second valve (4.8),
- at least one mounting leg (7) which is connected to the profile (3),
- at least one sharpener (8) which is connected to the mounting leg (7) and which enables to trim the end of the welding electrode located at the robot end,
- at least one tool check point (9) which is used as reference point in order to control the accuracy of the electrode connected to the robot end.

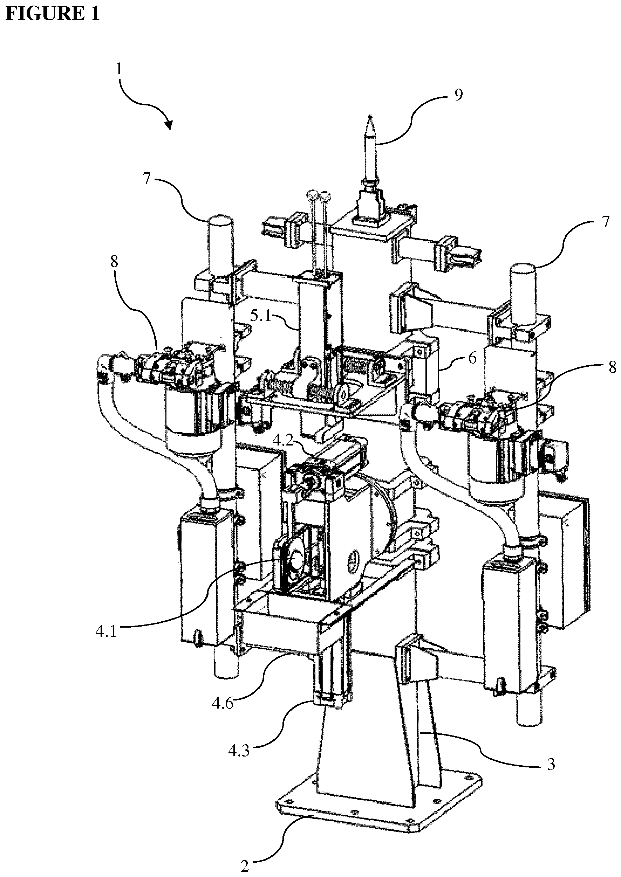

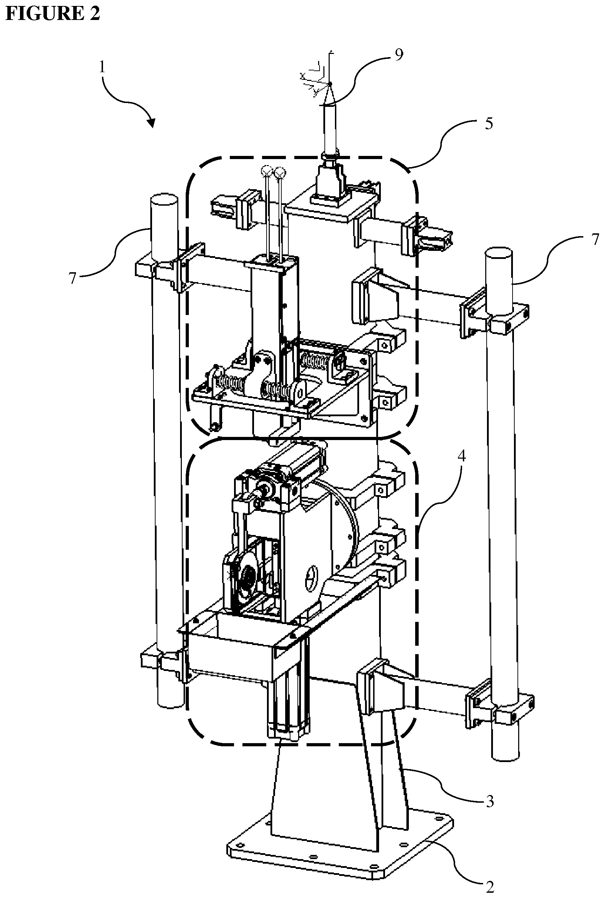

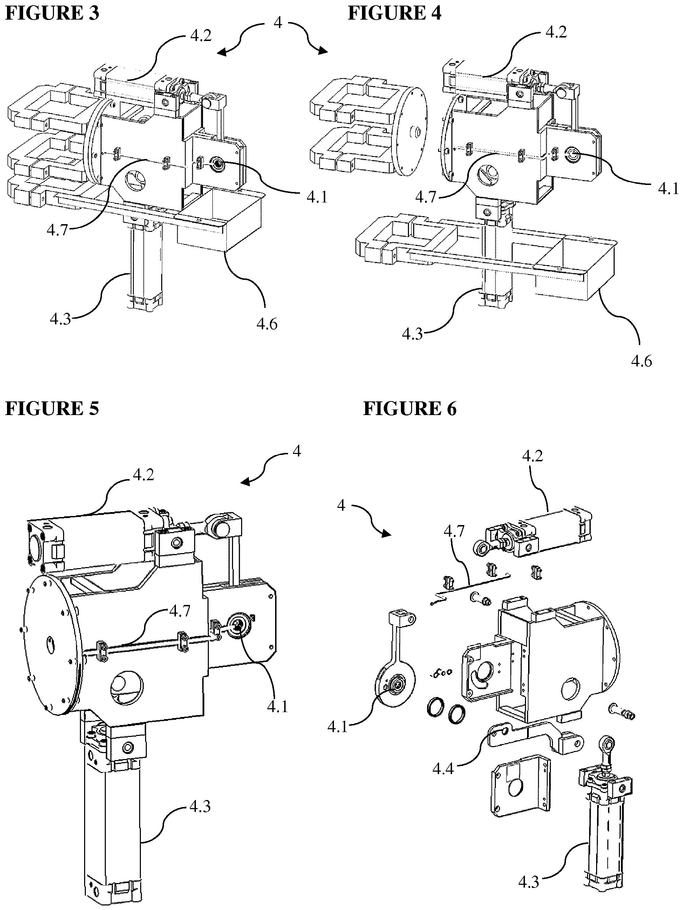

In a preferred embodiment of the inventive welding electrodes changing station (1), there is base plate (2) mounted on the ground, a profile (3) welded on the base plate (2), and an electrode removal system (4) connected to a plate mounted on the said profile (3) (Figure 1-Figure 4). In the said electrode removal system (4), there are first gear (4.1), first pusher (4.2), second pusher (4.3), second gear (4.4), first valve (4.5), box (4.6), pipe (4.7) and second valve (4.8) (Figure 5 and Figure 6). When it is time to change the electrode end used in welding process, a robot to which the abraded electrode is connected from its two ends comes to the spot end removal system and it positions the electrode in the first gear (4.1). In this position, the said robot communicates with a control unit (6) which is preferably a programmable logical controller (PLC), present in the welding electrodes changing station (1). Then, in accordance with the signal sent by the control unit (6), the first valve (4.5) is triggered and, air is sent to the first pusher (4.2) and the second pusher (4.3). With the effect of the incoming air, first pusher (4.2) applies pressure on the first gear (4.1) through an arm and it compresses the electrode positioned in the first gear (4.1). The second pusher (4.3) moves by applying more pressure than the first pusher (4.2) in opposite direction to the first pusher (4.2), and it turns the arm connected to its own end, and thus the second gear (4.4) at the end of this arm, and thus it enables the electrode in the first gear (4.1) to be removed. During removal, the second pusher (4.3) preferably moves back and forth at least two times in order to completely remove the electrode.

After the electrode is removed from the adapter of the robot, the second valve (4.8) is triggered by the control valve (6), and air is blown to the electrode remaining in the second gear (4.4) via the blowing pipe (4.7), and thus the electrode is enabled to fall into the box (4.6) preferably connected to the profile (2).

The robot the first electrode of which is removed moves the end of the adapter close to a sensor (5.3), and it is detected whether there is an electrode at the end of the adapter by the said sensor (5.3). If it is detected that the first electrode is not removed, a signal is sent to the control unit (6) by the sensor (5.3); the robot communicating with the control unit (6) is sent to the removal position in order to remove the first electrode again. Then, the processes performed during removing the first electrode are repeated. If it is detected that the first electrode is removed, the said robot places the second electrode present at the end of the second adapter into the second gear (4.4) for removal, and the same processes are repeated.

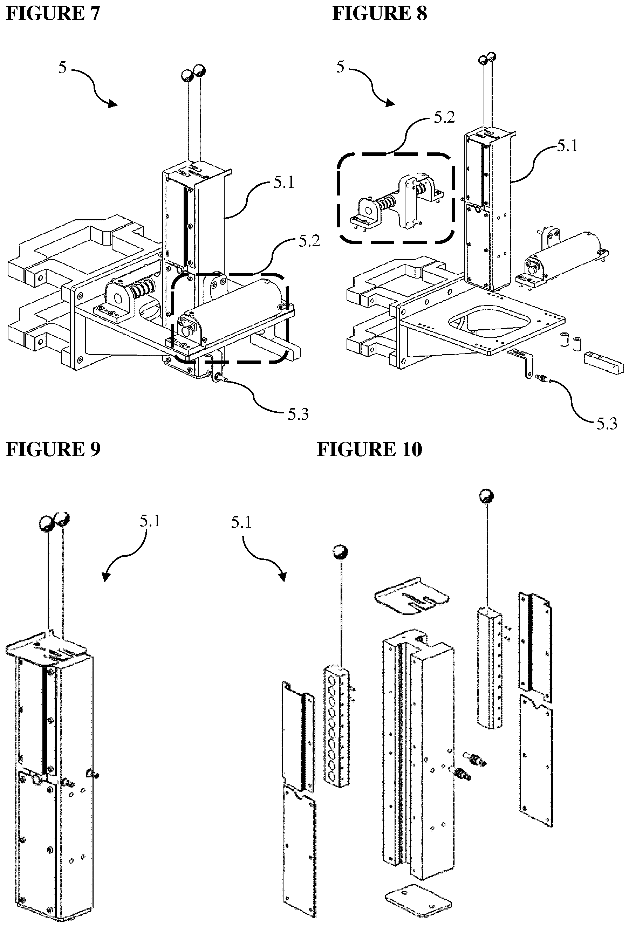

After the electrode is removed, the robot moves closer to the electrode changing system (5). In a preferred embodiment of the invention, there are two chargers (5.1) which are present on a plate connected to the profile (3) and which have preferably twelve electrodes carrying capacity for each, two spring connection systems (5.2), and a sensor (5.3) in the said electrode changing system (5) (Figure 7 and Figure 8). After the electrodes are removed, the robot aligns the adapter with the electrode preferably located at the bottom of the charger (5.1) and places it, and it applies pressure towards the said electrode, thereby enabling the electrode to be compressed towards the adapter (Figure 9 and Figure 10). In the meantime the pressure applied by the robot to the charger (5.1) is absorbed with the spring connection system (5.2).

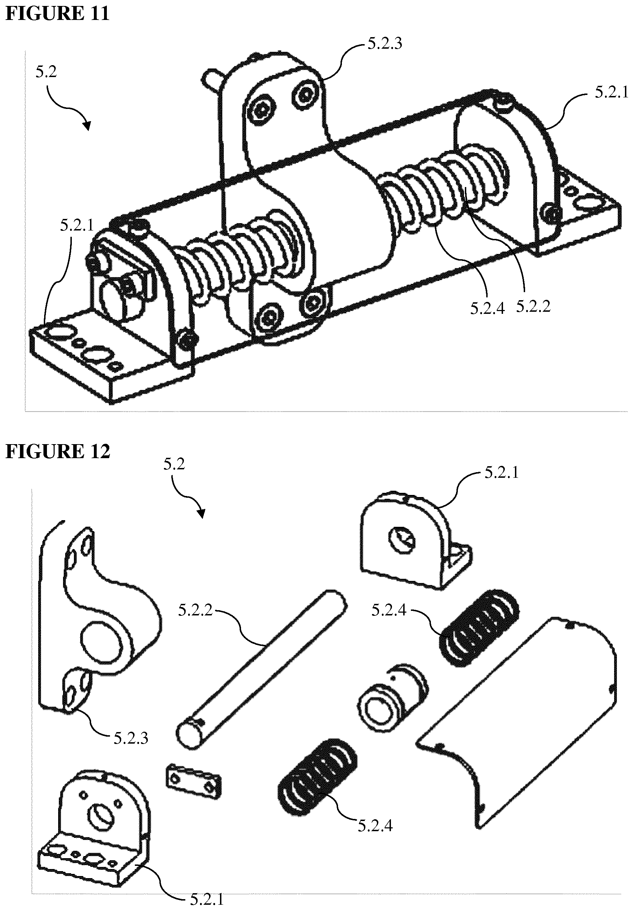

In one embodiment of the invention, the spring connection system (5.2) has two support pieces (5.2.1) which are fixed to a plate connecting the electrode changing system (5) to the profile (2), a shaft (5.2.2) placed between these two support pieces (5.2.1), a connection piece (5.2.3) which enables the said shaft (5.2.2) and the charger (5.1) to be connected to each other, and two springs (5.2.4) between the said connection piece (5.2.3) and the support pieces (5.2.1) (Figure 11 and Figure 12). When the robot places the adapter to the electrode at the bottom of the charger (5.1) and applies pressure towards the said electrode, this pressure causes the connection piece (5.2.3) one end of which is attached to the charger (5.1) and the other end of which is connected to the shaft (5.2.2) to be moved forward. However, a part of the pressure causing this movement is absorbed by the spring (5.2.4) present between the connection piece (5.2.3) and the support piece (5.2.1) on the shaft (5.2.2). Therefore, the pressure applied by end changing by the robot is absorbed by means of the spring connection system (5.2), and it is prevented that the force created due to pressure damages the equipment and the base connection.

When the robot takes the electrode located at the bottom of the charger (5.1), it moves the said new electrode closer to the sensor (5.3). If there is no electrode at the end of the robot, the robot brings the adapter to the charger (5.1) again in order to take the electrode. If there is an electrode, the same processes are repeated in order to take the second electrode.

In one embodiment of the invention, there are two mounting legs (7) connected preferably with bolted connection method, and two sharpeners (8) mounted to the mounting leg (7) (Figure 1). After the electrodes at the end of the robot are changed, the said new electrodes are brought to the sharpener (8) by the robot, and the electrodes are trimmed here.

In one embodiment of the invention, there is a reference point (9) (TCP point) located preferably on top of the profile (Figure 1). The said robot is brought to the reference point (9) manually in order to control the accuracy of the robot end when it is needed.

## Claims

1. A welding electrode changing station (1), which enables the welding electrodes located at a robot end to be changed, trimmed and controlled, essentially **comprising**
- at least one base plate (2) which is mounted on the ground,
- at least one profile (3) which is mounted on the base plate (2),
- at least one electrode removal system (4) which is connected to a plate mounted on the profile (3) and enables the electrode at a robot end to be removed,
- at least the electrode changing system (5) which enables to attach electrode to the robot end,
- at least one control unit (6),
**and characterized in that**
▪ at least one charger (5.1) and at least one spring connection system (5.2) are located in the electrode changing system (5),
▪ the charger (5.1) enables a plurality of electrodes to be carried,
▪ at least two support pieces (5.2.1), at least one shaft (5.2.2), at least one connection piece (5.2.3) and at least one spring (5.2.4) which are located in the said spring connection system (5.2),
• the spring connection system (5.2) enables to absorb the pressure applied towards the charger (5.1) with the spring (5.2.4) while the electrode is being taken by the electrode removal system (4), and
• the support pieces (5.2.1) are fixed to a plate connecting the electrode changing system (5) to the profile (2),
• the shaft (5.2.2) is placed between the support pieces (5.2.1),
• at least one connection piece (5.2.3) which enables the charger (5.1) and the shaft (5.2.2) to be connected to each other,
• the spring (5.2.4) is placed between the connection piece (5.2.3) and at least one support piece (5.2.1).

2. A welding electrodes changing station (1) according to claim 1, **characterized by**
▪ at least one first gear (4.1) which enables an electrode to be removed from the robot end to be compressed,
▪ at least one first pusher (4.2) which enables to apply pressure on the first gear (4.1) on which the electrode to be removed is placed,
▪ at least one second pusher (4.3) which moves in opposite direction of the first pusher (4.2),
▪ at least one second gear (4.4) which is located on an arm connected to the second pusher (4.3), and which enables the electrode compressed in the first gear (4.1) as a result of the movement of the second pusher (4.3) to be removed,
▪ at least one first valve (4.5) which enables to control the air to be sent to the first pusher (4.2) and the second pusher (4.3), which are located in the electrode removal system (4).

3. A welding electrodes changing station (1) according to claim 2, **characterized by** at least one box (4.6) wherein the electrodes removed from the robot end are collected.

4. A welding electrodes changing station (1) according to claim 3, **characterized by** at least one box pipe (4.7) which blows air to the electrode so that the removed electrode falls into the box (4.6).

5. A welding electrodes changing station (1) according to claim 4, **characterized by** at least one second valve (4.8) which enables to control the air to be sent to the pipe (4.7).

6. A welding electrodes changing station (1) according to claim 1, **characterized by** at least one sensor (5.3) which enables to detect whether there is an electrode at the robot end.

7. A welding electrodes changing station (1) according to claim 1, **characterized by** control unit (6) which is a programmable logical controller (PLC).

8. A welding electrode changing station (1) according to claim 1 or 7, **characterized by** control unit (6) which sends signal to the first valve (4.5) in order to send air to the first pusher (4.2) and the second pusher (4.3).

9. A welding electrodes changing station (1) according to claim 1, **characterized by** at least one mounting leg (7) which is connected to the profile (3).

10. A welding electrodes changing station (1) according to claim 7, **characterized by** at least one sharpener (8) which is connected to the mounting leg (7) and which enables to trim the end of the welding electrode located at the robot end.

11. A welding electrodes changing station (1) according to claim 7, **characterized by** at least one reference point (9) which is preferably placed on top of the profile (3), and which is used as reference point in order to control the accuracy of the electrode connected to the robot end.

12. A welding electrodes changing station (1) according to claim 1, **characterized by** the second pusher (4.3) enabling the second gear (4.4) to be rotated by applying more pressure on the first pusher (4.2) than the pressure applied by the first pusher (4.2) in opposite direction.

## Patentansprüche

1. Schweißelektrodenwechselstation (1), die es ermöglicht, die an einem Roboterende befindlichen Schweißelektroden zu wechseln, zu trimmen und zu steuern, im Wesentlichen **umfassend**
- mindestens eine Grundplatte (2), die am Boden montiert ist,
- mindestens ein Profil (3), das auf der Grundplatte (2) montiert ist,
- mindestens ein Elektrodenentnahmesystem (4), das mit einer am Profil (3) montierten Platte verbunden ist und es ermöglicht, die Elektrode an einem Roboterende zu entfernen,
- mindestens das Elektrodenwechselsystem (5), das es ermöglicht, die Elektrode an dem Roboterende anzubringen,
- mindestens ein Steuereinheit (6),
**und dadurch gekennzeichnet, dass**
▪ mindestens ein Ladegerät (5.1) und mindestens ein Federverbindungssystem (5.2) sind im Elektrodenwechselsystem (5) befindet,
▪ das Ladegerät (5.1) ermöglicht das Tragen einer Vielzahl von Elektroden,
▪ mindestens zwei Stützstücke (5.2.1), mindestens eine Welle (5.2.2), mindestens ein Verbindungsstück (5.2.3) und mindestens eine Feder (5.2.4), die sich im genannten Federverbindungssystem (5.2) befindet,
• das Federverbindungssystem (5.2) es ermöglicht, den Druck, der mit der Feder (5.2.4) auf das Ladegerät (5.1) ausgeübt wird, zu absorbieren, während die Elektrode von dem Elektrodenentnahmesystem (4) aufgenommen wird, und
• die Stützstücke (5.2.1) an einer Platte befestigt sind, die das Elektrodenwechselsystem (5) mit dem Profil (2) verbindet,
• die Welle (5.2.2) zwischen den Stützstücken (5.2.1) platziert ist.,
• mindestens ein Verbindungsstück (5.2.3), das es ermöglicht, das Ladegerät (5.1) und die Welle (5.2.2) miteinander zu verbinden,
• die Feder (5.2.4) zwischen dem Verbindungsstück (5.2.3) und mindestens einem Stützstück (5.2.1) platziert ist.

2. Schweißelektrodenwechselstation (1) nach Anspruch 1, **gekennzeichnet durch**
▪ mindestens ein erstes Zahnrad (4.1), das es ermöglicht, eine Elektrode vom Roboterende zu entfernen und zu komprimieren,
▪ mindestens einen ersten Schieber (4.2), der es ermöglicht, Druck auf den ersten Zahnrad (4.1) auszuüben, auf dem die zu entfernende Elektrode platziert ist,
▪ mindestens einen zweiten Schieber (4.3), der sich entgegen der Richtung des ersten Schiebers (4.2) bewegt,
▪ mindestens ein zweites Zahnrad (4.4), das sich an einem mit dem zweiten Schieber (4.3) verbundenen Arm befindet und das das Entfernen der im ersten Zahnrad (4.1) durch die Bewegung des zweiten Schiebers (4.3) komprimierten Elektrode ermöglicht,
▪ mindestens ein erstes Ventil (4.5), das die Steuerung der dem ersten Schieber (4.2) zuzuführenden Luft ermöglicht, und den zweiten Schieber (4.3), die sich im Elektrodenentnahmesystem (4) befinden.

3. Schweißelektrodenwechselstation (1) nach Anspruch 2, **gekennzeichnet durch** mindestens einen Kasten (4.6), in dem die vom Roboterende entfernten Elektroden gesammelt werden

4. Schweißelektrodenwechselstation (1) nach Anspruch 3, **gekennzeichnet durch** mindestens ein Kastenrohr (4.7), das Luft zur Elektrode bläst, so dass die entfernte Elektrode in den Kasten (4.6) fällt.

5. Schweißelektrodenwechselstation (1) nach Anspruch 4, **gekennzeichnet durch** mindestens ein zweites Ventil (4.8), das es ermöglicht, die dem Rohr (4.7) zuzuführende Luft zu steuern.

6. Schweißelektrodenwechselstation (1) nach Anspruch 1, **gekennzeichnet durch** mindestens einen Sensor (5.3), der es ermöglicht, zu erkennen, ob sich auf der Roboterseite eine Elektrode befindet.

7. Schweißelektrodenwechselstation (1) nach Anspruch 1, **gekennzeichnet durch** eine Steuereinheit (6), die eine programmierbare logische Steuerung (PLC) ist.

8. Schweißelektrodenwechselstation (1) nach Anspruch 1 oder 7,
**gekennzeichnet durch** eine Steuereinheit (6), die ein Signal an das erste Ventil (4.5) sendet, um Luft an den ersten Schieber (4.2) und den zweiten Schieber (4.3) zu senden.

9. Schweißelektrodenwechselstation (1) nach Anspruch 1, **gekennzeichnet durch** mindestens einen Montageschenkel (7), der mit dem Profil (3) verbunden ist

10. Schweißelektrodenwechselstation (1) nach Anspruch 7, **gekennzeichnet durch** mindestens einen Schärfer (8), der mit dem Montageschenkel (7) verbunden ist und das Trimmen des Endes der Schweißelektrode am Roboterende, ermöglicht.

11. Schweißelektrodenwechselstation (1) nach Anspruch 7, **gekennzeichnet durch** mindestens einen Referenzpunkt (9), der vorzugsweise auf das Profil (3) gelegt ist und der als Referenzpunkt verwendet wird, um die Genauigkeit der mit dem Roboterende verbundenen Elektrode zu steuern.

12. Schweißelektrodenwechselstation (1) nach Anspruch 1, **gekennzeichnet durch** den zweiten Schieber (4.3), der es ermöglicht, den zweiten Zahnrad (4.4) zu drehen, indem mehr Druck auf den ersten Schieber (4.2) ausgeübt wird als der vom ersten Schieber (4.2) in entgegengesetzter Richtung ausgeübte Druck.

## Revendications

1. Station de changement d'électrode de soudage (1), qui permet de changer, de couper et de commander les électrodes de soudage situées à l'extrémité d'un robot, **comprenant** essentiellement
- au moins une plaque de base (2) qui est montée au sol,
- au moins un profil (3) qui est monté sur la plaque de base (2),
- au moins un système d'élimination d'électrode (4) qui est relié à une plaque montée sur le profil (3) et qui permet d'éliminer l'électrode à une extrémité du robot,
- au moins le système de changement d'électrode (5) qui permet de fixer l'électrode à l'extrémité du robot,
- au moins une unité de commande (6),
et **caractérisée en ce que**
▪ au moins un chargeur (5.1) et au moins un système de connexion à ressort (5.2) sont situés dans le système de changement d'électrode (5),
▪ le chargeur (5.1) permet de transporter plusieurs électrodes,
▪ au moins deux pièces de support (5.2.1), au moins un arbre (5.2.2), au moins une pièce de connexion (5.2.3) et au moins un ressort (5.2.4) qui sont situés dans ledit système de connexion à ressort (5.2),
• le système de connexion à ressort (5.2) permet d'absorber la pression appliquée vers le chargeur (5.1) avec le ressort (5.2.4) pendant que l'électrode est prise par le système d'élimination d'électrode (4), et
• les pièces de support (5.2.1) sont fixées sur une plaque reliant le système de changement d'électrode (5) au profil (2),
• l'arbre (5.2.2) est placé entre les pièces de support (5.2.1),
• au moins une pièce de connexion (5.2.3) qui permet de relier le chargeur (5.1) et l'arbre (5.2.2) entre eux,
• le ressort (5.2.4) est placé entre la pièce de connexion (5.2.3) et au moins une pièce support (5.2.1).

2. Station de changement d'électrode de soudage (1) selon la revendication 1, **caractérisée en ce que**
▪ au moins un premier engrenage (4.1) qui permet de retirer une électrode de l'extrémité du robot à comprimer,
▪ au moins un premier poussoir (4.2) qui permet d'appliquer une pression sur le premier engrenage (4.1) sur lequel l'électrode à éliminer est placée,
▪ au moins un deuxième poussoir (4.3) qui se déplace dans la direction opposée au premier poussoir (4.2),
▪ au moins un deuxième engrenage (4.4) qui est situé sur un bras relié au deuxième poussoir (4.3), et qui permet d'éliminer l'électrode comprimée dans le premier engrenage (4.1) du fait du déplacement du deuxième poussoir (4.3),
▪ au moins une première valve (4.5) qui permet de commander l'air à envoyer au premier poussoir (4.2) et au second poussoir (4.3), qui se trouvent dans le système d'élimination des électrodes (4).

3. Station de changement d'électrode de soudage (1) selon la revendication 2, **caractérisée en ce que** au moins une boîte (4.6) dans laquelle les électrodes éliminées de l'extrémité du robot sont collectées.

4. Station de changement d'électrode de soudage (1) selon la revendication 3, **caractérisée en ce que** au moins une boîte tubulaire (4.7) qui souffle de l'air sur l'électrode de sorte que l'électrode éliminée tombe dans la boîte (4.6).

5. Station de changement d'électrode de soudage (1) selon la revendication 4, **caractérisée en ce que** au moins une deuxième valve (4.8) qui permet de contrôler l'air à envoyer dans la tube (4.7).

6. Station de changement d'électrode de soudage (1) selon la revendication 1, **caractérisée en ce que** au moins un capteur (5.3) qui permet de détecter s'il y a une électrode à l'extrémité du robot.

7. Station de changement d'électrode de soudage (1) selon la revendication 1, **caractérisée en ce que** l'unité de commande (6) qui est un contrôleur logique programmable (PLC).

8. Station de changement d'électrode de soudage (1) selon la revendication 1 ou 7, **caractérisée en ce que** l'unité de commande (6) qui envoie un signal à la première valve (4.5) afin d'envoyer de l'air au premier poussoir (4.2) et au second poussoir (4.3).

9. Station de changement d'électrode de soudage (1) selon la revendication 1, **caractérisée en ce que** au moins une jambe de montage (7) qui est reliée au profil (3).

10. Station de changement d'électrode de soudage (1) selon la revendication 7, **caractérisée en ce que** au moins un aiguiseur (8) qui est relié à la jambe de montage (7) et qui permet d'ajuster l'extrémité de l'électrode de soudage située à l'extrémité du robot.

11. Station de changement d'électrode de soudage (1) selon la revendication 7, **caractérisée en ce que** au moins un point de référence (9) qui est placé de préférence sur le profil (3) et qui sert de point de référence pour contrôler la précision de l'électrode reliée à l'extrémité du robot.

12. Station de changement d'électrode de soudage (1) selon la revendication 1, **caractérisée en ce que** le deuxième poussoir (4.3) permettant de faire tourner le deuxième engrenage (4.4) en appliquant plus de pression sur le premier poussoir (4.2) que la pression appliquée par le premier poussoir (4.2) dans le sens opposé.
